# FASCICULE DE BREVET EUROPEEN

(11) **EP 0 398 796 B1**
(45) Date de publication et mention de la délivrance du brevet: **11.08.1993**
(21) Numéro de dépôt: 90401279.6
(22) Date de dépôt: 15.05.1990
(51) Int. Cl.: G01C 19/72

(54) **Interféromètre en anneau**
Ringinterferometer
Ring interferometer

(30) Priorité: 19.05.1989 FR 8906579
(43) Date de publication de la demande: 22.11.1990
(73) Titulaire: THOMSON-CSF, 75008 Paris (FR)
(72) Inventeur: Turpin, Marc, F-92045 Paris la Défense (FR); Botti, Serge, F-92045 Paris la Défense (FR); Rolly, Didier, F-92045 Paris la Défense (FR)
(74) Mandataire: Chaverneff, Vladimir

(56) Documents cités:
- DE-A- 2 941 618
- US-A- 4 153 370
- US-A- 4 596 466
- US-A- 4 712 306

## Description

La présente invention se rapporte à un interféromètre en anneau.

Dans certains systèmes interférométriques, tels que des gyromètres, l'utilisation d'une configuration particulière, dite "réciproque minimale", permet d'annuler exactement tout déphasage autre que ceux induits par des effets non réciproques. Ces effets non réciproques sont en particulier l'effet Faraday (effet magnéto-optique colinéaire) et l'effet Sagnac, selon lequel, par effet inertiel relativiste, la rotation de l'interféromètre par rapport à un repère galiléen détruit la symétrie des temps de propagation.

On connaît des gyromètres à configuration minimale réciproque. Particulièrement simple, cette configuration comporte un dispositif séparateur, à trois portes monomodes, nécessaire pour injecter la lumière incidente aux extrémités d'une boucle de fibre optique constituant la partie sensible de l'interféromètre.

La section unique d'entrée-sortie du séparateur constitue un filtre unimodal qui assure la parfaite réciprocité optique du système. Suivant un mode de réalisation, le séparateur est multifonction : il assure le filtrage de mode par polarisation de la lumière, et la modulation des ondes contrarotatives pour permettre le traitement du signal détecté. Le système comporte en outre une source lumineuse et un dispositif optoélectronique de détection. Suivant un mode de réalisation préféré de ce dispositif connu, les divers éléments précités sont regroupés dans un boîtier unique de taille réduite et relié au dispositif électronique de contrôle par un câble d'alimentation et un câble de transport des informations en provenance du détecteur.

Ces câbles électriques, même lorsqu'ils sont bien blindés, sont sujets au parasitage électromagnétique, ce qui perturbe les mesures des signaux détectés.

On connaît d'après le document US-A-4 153 370 un transducteur microinterférométrique dans lequel la liaison entre le capteur et les détecteurs se fait par fibres optiques, mais ce document ne préconise ni ne suggère aucune solution à la liaison directive entre un anneau interférométrique et son détecteur.

La présente invention a pour objet un interféromètre du type en anneau à centrale de traitement et d'alimentation déportée, cet interféromètre étant le plus compact possible et ne présentant pratiquement aucun risque d'être perturbé par des parasités électromagnétiques.

L'interféromètre conforme à l'invention est un interféromètre en anneau à centrale de traitement et d'alimentation déportée, dont le détecteur optoélectronique est disposé à distance de la tête de mesure compacte et relié par celle-ci par une fibre optique et comportant un dérivateur entre la source lumineuse et la tête de mesure, caractérisé par le fait que le dérivateur comporte une fibre monomode courbée érodée localement et superficiellement, la zone érodée étant polie, un bloc de matériau transparent aux longueurs d'ondes utilisées à géométrie asymétrique, et dont l'indice de réfraction est supérieur à celui de la fibre, étant collé contre la face polie de la fibre, ladite fibre optique reliant le détecteur optoélectronique à la tête de mesure étant collé contre une face dudit bloc.

Selon un mode de réalisation de l'invention, la source lumineuse est également disposée à distance de la tête de mesure et reliée à celle-ci par une fibre optique.

La présente invention sera mieux comprise à la lecture de la description détaillée de plusieurs modes de réalisation et illustrée par le dessin annexé, sur lequel :
- la figure 1 est le schéma simplifié d'un interféromètre en anneau de l'art antérieur,
- la figure 2 est une vue en coupe d'un dérivateur de lumière utilisé dans l'interféromètre de la figure 1,
- la figure 3 est le schéma simplifié d'un interféromètre en anneau conforme à l'invention,
- la figure 4 est une vue en coupe d'un dérivateur de lumière utilisé dans l'interféromètre de la figure 3, et
- la figure 5 est le schéma simplifié d'une variante d'un interféromètre en anneau conforme à l'invention.

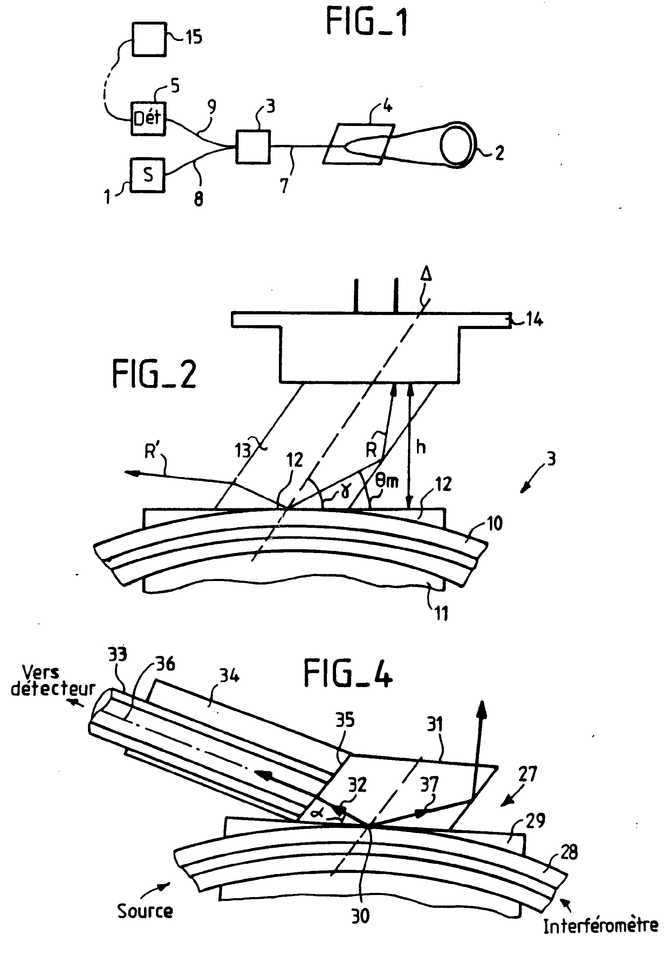

Un système interférométrique du type en anneau comporte, comme représenté en figure 1, une source lumineuse 1 reliée à un anneau 2 en fibre optique via un dérivateur 3 et un séparateur ou port d'entrée-sortie 4. Un détecteur 5 est également relié au dérivateur 3.

Le dérivateur 3 permet de détecter le flux lumineux utile qui revient de l'anneau 2, constituant la partie sensible de l'interféromètre, en prélevant une partie du flux lumineux contenant les informations de déphasage et de le diriger vers le détecteur 5.

La réciprocité du système est obtenue si la section 6 en aval du dérivateur 3 est rigoureusement monomode (au sens spatial et au sens de la polarisation) à savoir la section comportant les fibres optiques monomodes 2 et 7 (fibre 7 entre dérivateur 3 et séparateur 4) monomodes. Ainsi, le dérivateur 3 ne nécessite que deux portes monomodes pour la liaison par fibre optique monomode 8 avec la source 1, et la liaison d'entrée-sortie avec la fibre 7. La liaison 9 entre le dérivateur 3 et le détecteur 5 peut aussi bien être multimode que monomode.

Le dérivateur 3 (figure 2) est par exemple réalisé à l'aide d'une fibre monomode 10 maintenue courbée par collage dans un support 11 approprié. Après érosion locale superficielle de cette fibre et polissage de la face 12 ainsi obtenue, on colle sur cette face un bloc 13 de matériau transparent aux longueurs d'ondes utilisées et dont l'indice de réfraction est supérieur à celui de la fibre. Ainsi, une partie du flux lumineux utile (venant de l'anneau 2) transporté par la fibre peut être couplé vers l'extérieur. Ce flux se propage dans le bloc 13 et est dirigé sur un détecteur opto-électronique 14 après réflexion et focalisation. La géométrie asymétrique du bloc 13 permet de réfracter hors du champ du détecteur et hors du bloc (rayons R') la partie de flux prélevé dans le sens source-interféromètre. La nature multimode de la propagation des ondes lumineuses entre le dérivateur 3 et le détecteur 5 ne perturbe pas le fonctionnement du système interférométrique, qui reste globalement réciproque.

La liaison entre le détecteur 14 et la centrale distante 15 de traitement des signaux du détecteur et d'alimentation est réalisée en câble électrique blindé, ce câble, souvent relativement long, pouvant être parasité par des perturbations électromagnétiques, comme précisé ci-dessus.

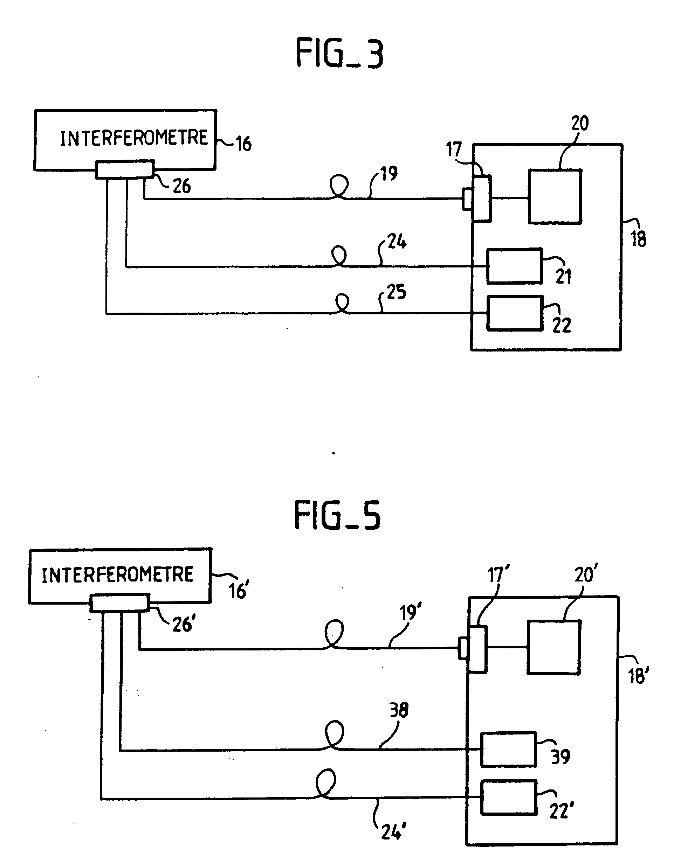

Le système interférométrique conforme à l'invention et schématisé en figure 3 ne présente pas ces risques de parasitage. En effet, la tête d'interféromètre 16 ne comporte plus de détecteur optoélectronique, et celui-ci (17) est déporté dans la centrale distante de traitement 18. La liaison entre la tête 16 et le détecteur 17 est assurée par une liaison optique à fibre 19. Cette fibre 19 peut aussi bien être multimode que monomode. De préférence, elle est multimode, car dans ce cas elle ne nécessite que des connecteurs simples et faciles à mettre en oeuvre.

La centrale 18 comporte essentiellement un dispositif électronique 20 de traitement des signaux issus du détecteur 17, un dispositif 21 de production de signaux de modulation et de contre-réaction pour le modulateur de phase de la tête 16, et un dispositif 22 d'alimentation en énergie de la source lumineuse, de régulation et de contrôle. Tous ces éléments étant bien connus, ne seront pas décrits plus en détail. La liaison entre les éléments 21 et 22 et la tête 16 est réalisée par des câbles électriques blindés 24,25 respectivement. Les câbles 19,24,25 sont reliés à la tête 16 par des connecteurs 26 appropriés.

Le dérivateur 27 (figure 4) est réalisé à partir d'une fibre optique monomode 28 maintenue courbée dans un support 29. La fibre 28 est érodée localement et superficiellement en 30, puis polie. Un bloc 31 en matériau d'indice de réfraction supérieur à celui de la fibre 28 est collé contre cette face polie. La géométrie du bloc 31 est telle que la fraction 32 de flux lumineux utile prélevé de la fibre 28 soit réfractée suivant une face de ce bloc. Dans le mode de réalisation représenté, le bloc 31 a une forme prismatique.

Une fibre optique multimode 33 maintenue par un manchon de fixation 34, solidement fixé au support 29, est mise en place en contact avec la face 35 du bloc 31 qui reçoit le faisceau utile réfracté 32. La fibre 33 est à large coeur de guidage et est polie à son extrémité et mise en contact avec le bloc 31. L'axe 36 de symétrie (axiale) de la fibre 33 est aligné suivant la direction moyenne du faisceau 32 pour optimiser le couplage d'énergie lumineuse (en négligeant l'angle de réfraction du faisceau 32 lorsqu'il passe du bloc 31 dans la fibre 33). Pour assurer un bon couplage optique entre le bloc 31 et la fibre 33, on utilise avantageusement à leur interface une colle polymérisable en rayonnement ultra-violet et d'indice de réfraction approprié.

Selon un mode de réalisation, on utilise des fibres optiques à base de silice dopée dont l'indice de réfraction moyen est n1 = 1,46, le bloc 31 ayant un indice plus élevé n2 = 1,52. Dans ces conditions, suivant les lois de la réfraction, l'angle de fuite ϑm de la lumière dans le bloc 31 (par rapport à la face polie de la fibre 28) est de l'ordre de 16°. Dans cette direction, la diffraction est très faible, de l'ordre de 10⁻³. Par contre, dans le plan formant un angle m avec la surface polie, l'angle Alpha de diffraction est de l'ordre de 10 à 20°. Cet angle important (supérieur à 15°) ne s'oppose pas à un couplage efficace dans une fibre optique multimode d'ouverture numérique classique (l'ouverture numérique d'une fibre optique est, par définition, le sinus du demi-angle d'acceptance du faisceau). Dans ce cas, sin ϑm = 0,25.

Suivant le principe du dérivateur directif, l'énergie lumineuse réfractée hors de la fibre monomode 28 dans le sens opposé au sens utile (rayons 37) n'est pas couplée dans la fibre multimode 33 et ne dégrade pas le rapport signal à bruit de l'interféromètre.

Le flux lumineux 32 utile à la mesure interférométrique par déphasage, et couplé dans la fibre 33, est dirigé par celle-ci vers le détecteur éloigné 17. Le couplage entre la fibre 33 et le détecteur 17 est réalisé de façon connue en soi.

L'interféromètre en anneau ainsi réalisé se compose essentiellement de la tête de mesure 16, de l'unité de contrôle 18 et des liaisons 19,24,25, le détecteur opto-électronique (17) étant disposé dans l'unité de contrôle au plus près des étages d'amplification (20), ce qui réduit la sensibilité du système aux perturbations électromagnétiques. Les liaisons électriques entre la tête de mesure et l'unité de contrôle sont réduites aux liaisons propres à la source lumineuse et aux connexions de modulation et de contre-réaction. Le signal utile à la mesure se propage sous forme optique, ce qui offre des garanties d'isolation aux rayonnements électromagnétiques, et limite les interférences parasites entre les liaisons électriques. Bien entendu, la liaison entre la tête 16 et l'unité de contrôle 18 peut être réalisée avec un câble mixte, optique et électrique.

Selon le mode de réalisation de la figure 5, on déporte la source lumineuse hors de la tête de meusre, en la reliant à la tête de mesure par une fibre monomode.

En effet, en gyrométrie optique de classe inertielle, le caractère rigoureusement monomode (au sens spatial et au sens de la polarisation) est un critère de première importance. Suivant le degré de précision requis, le contrôle de l'état de polarisation du flux lumineux en provenant de la source nécessite une liaison monomode à conservation de polarisation. Pour cette raison, les connecteurs utilisés sur la liaison monomode entre la source et l'interféromètre doivent conserver la polarisation incidente, ce qui est le cas des connecteurs monomodes connus. Bien entendu, il est alors nécessaire de veiller à bien aligner les axes de polarisation des connecteurs (ou des épissures, le cas échéant).

Dans le système de la figure 5, la tête de mesure 16' est reliée à l'unité de contrôle 18' par un câble électrique 24' et deux fibres optiques 19' et 38. Le câble 24' permet d'appliquer la modulation et les signaux de contre-réaction au modulateur de phase (non représenté) de la tête de mesure. La fibre 19', multimode, assure la liaison optique entre l'interféromètre et le détecteur 17' de l'unité 18'. La fibre 38, monomode à conservation de polarisation linéaire, assure la liaison optique entre la source 39 (disposée dans l'unité 18') et l'interféromètre 16'. L'unité 18' comporte également des circuits 20' de traitement du signal fourni par le détecteur 17'.

Le dispositif de la figure 5 est avantageux du fait que le détecteur 17' est le plus près possible des circuits 20' qui traitent son signal, et du fait que la source lumineuse 39 est également très proche de ses dispositifs d'alimentation et de régulation. Dans la plupart des applications, il est nécessaire d'assurer une régulation en température de la source lumineuse, ce qui est beaucoup plus aisé à mettre en oeuvre dans l'unité 18', qui peut être suffisamment éloignée du site de mesure, et donc facilement protégeable des agressions de l'environnement, alors que la tête de mesure 16' risque d'être soumise à des variations de température importantes.

## Revendications

1. Interféromètre en anneau à centrale de traitement et d'alimentation déportée, dont le détecteur optoélectronique (17,17') est disposé à distance de la tête de mesure compacte (16) et relié à celle-ci par une fibre optique (19) et comportant un dérivateur (27) entre la source lumineuse (1) et la tête de mesure (16), caractérisé par le fait que le dérivateur comporte une fibre monomode (28) courbée érodée localement et superficiellement, la zone érodée étant polie (30), un bloc (31) de matériau transparent aux longueurs d'ondes utilisées à géométrie asymétrique, et dont l'indice de réfraction est supérieur à celui de la fibre, étant collé contre la face polie de la fibre, ladite fibre optique (33) reliant le détecteur optoélectronique à la tête de mesure étant collé contre une face (35) dudit bloc.

2. Interféromètre selon la revendication 1, caractérisé par le fait que ladite fibre optique reliant le détecteur à la tête de mesure est une fibre multimode.

3. Interféromètre selon la revendication 1 ou 2, caractérisé par le fait que le détecteur optoélectronique est disposé dans la centrale de traitement (18, 18').

4. Interféromètre selon l'une des revendications précédentes, caractérisé par le fait que la source lumineuse (39) de l'interféromètre est déportée et reliée par une autre fibre optique (38).

5. Interféromètre selon la revendication 4, caractérisé par le fait que ladite autre fibre optique est une fibre monomode.

6. Interféromètre selon la revendication 5, caractérisé par le fait que ladite autre fibre optique est une fibre monomode à conservation de polarisation linéaire.

7. Interféromètre selon la revendication 4 ou 5 ou 6, caractérisé par le fait que la source lumineuse est disposée dans la centrale de traitement (18').

## Patentansprüche

1. Ringinterferometer mit Verarbeitungszentrale und ausgelagerter Versorgung, dessen optoelektronischer Detektor (17, 17') im Abstand vom kompakten Meßkopf (16) angeordnet ist und an diesen über eine Lichtleitfaser (19) angeschlossen ist und zwischen der Lichtquelle (1) und dem Meßkopf(16) ein Ableitorgan (27) enthält, dadurch gekennzeichnet, daß das Ableitorgan eine gekrümmte Monomodenfaser (28) aufweist, die örtlich und an der Oberfläche abgetragen ist, wobei die abgetragene Zone (30) poliert ist, ferner einen Block (31) aus einem für die angewendeten Wellenlängen durchlässigen Material mit assymetrischer Geometrie aufweist, dessen Brechungsindex größer als der der Faser ist und an der polierten Fläche der Faser angeklebt ist, wobei die den optoelektronischen Detektor mit dem Meßkopf verbindende Lichtleitfaser (33) an einer Fläche (35) des Blocks angeklebt ist.

2. Interferometer nach Anspruch 1, dadurch gekennzeichnet, daß die Lichtleitfaser, die den Detektor mit dem Meßkopf verbindet, eine Multimodenfaser ist.

3. Interferometer nach Anspruch 1 oder 2, dadurch gekennzeichnet, daß der optoelektronische Detektor in der Verarbeitungszentrale (18, 18') angebracht ist.

4. Interferometer nach einem der vorhergehenden Ansprüche, dadurch gekennzeichnet, daß die Lichtquelle (39) des Interferometers ausgelagert ist und mittels einer weiteren Lichtleitfaser (38) angeschlossen ist.

5. Interferometer nach Anspruch 4, dadurch gekennzeichnet, daß die weitere Lichtleitfaser eine Monomodenfaser ist.

6. Interferometer nach Anspruch 5, dadurch gekennzeichnet, daß die weitere Lichtleitfaser eine Monomodenfaser mit Beibehaltung der linearen Polarisation ist.

7. Interferometer nach Anspruch 4 oder 5 oder 6, dadurch gekennzeichnet, daß die Lichtquelle in der Verarbeitungszentrale (18') angebracht ist.

## Claims

1. Ring interferometer with offset central processing unit and supply, whose optoelectronic detector (17,17') is located remote from the compact measurement head (16), and is connected to the latter by an optical fibre (19), and comprising a junction (27) between the light source (1) and the measurement head (16), characterised in that the junction comprises a curved monomode fibre (28) which is eroded locally and at the surface, the eroded zone being polished (30), a block (31) of material, transparent to the wavelengths used, with asymmetric geometry, and whose refractive index is greater than that of the fibre, being bonded against the polished face of the fibre, the said optical fibre (33) connecting the optoelectronic detector to the measurement head being bonded against one face (35) of the said block.

2. Interferometer according to Claim 1, characterised in that the said optical fibre connecting the detector to the measurement head is a multimode fibre.

3. Interferometer according to Claim 1 or 2, characterised in that the optoelectronic detector is located in the central processing unit (18,18').

4. Interferometer according to one of the preceding claims, characterised in that the light source (39) of the interferometer is offset and connected by another optical fibre (38).

5. Interferometer according to Claim 4, characterised in that the said other optical fibre is a mono-mode fibre.

6. Interferometer according to Claim 5, characterised in that the said other optical fibre is a monomode fibre with linear polarisation preservation.

7. Interferometer according to Claim 4 or 5 or 6, characterised in that the light source is located in the central processing unit (18').
